# FASCICULE DE BREVET EUROPEEN

(11) **EP 1 327 767 B1**
(45) Date de publication et mention de la délivrance du brevet: **07.06.2006**
(21) Numéro de dépôt: 03290018.5
(22) Date de dépôt: 06.01.2003
(51) Int. Cl.: F02K 1/82, F02K 1/64

(54) **Dispositif de refroidissement de la tuyère commune sur une nacelle**
Kühleinrichtung für eine gemeinsame Schubdüse eines Doppelstromflugtriebwerks
Cooling device for a common nozzle of a turbofan engine

(30) Priorité: 10.01.2002 FR 0200234
(43) Date de publication de la demande: 16.07.2003
(73) Titulaire: AIRCELLE, 76700 Gonfreville l'Orcher (FR)
(72) Inventeur: Le Docte, Thierry Jacques, 76700 Gainneville (FR); Vicogne, Laurent Marcel, 76133 Rolleville (FR)
(74) Mandataire: Chevalier, Renaud Philippe

(56) Documents cités:
- FR-A- 2 593 237
- FR-A- 2 717 859
- GB-A- 1 258 331
- US-A- 3 826 088
- US-A- 3 837 411

## Description

L'invention concerne le domaine des turboréacteurs à double flux équipant des aéronefs subsoniques et comportant une nacelle longue terminée par une tuyère commune d'éjection du flux primaire et du flux secondaire.

L'invention concerne plus précisément un turboréacteur à double flux comportant un moteur d'axe X logeant complètement dans une nacelle tubulaire dont la paroi interne définit avec le carter dudit moteur un passage annulaire dans lequel s'écoule un flux secondaire délivré par une soufflante, ladite nacelle présentant une entrée d'air en amont du moteur, des moyens d'inversion de poussée dans sa section médiane et une tuyère commune d'éjection du flux primaire et du flux secondaire située en aval du carter du moteur, lesdits moyens d'inversion de poussée étant susceptibles de prendre une position active dans laquelle le flux secondaire est dévié vers l'extérieur et vers l'avant de ladite nacelle, ladite tuyère comportant une enceinte délimitée par les parois interne et externe de ladite tuyère.

L'extrémité aval du carter du moteur qui sépare la veine du flux primaire chaud de la veine du flux secondaire froid est équipée d'un mélangeur dont le but est d'accélérer le mélange des deux flux chaud et froid, afin de diminuer la vitesse des gaz éjectés par la tuyère commune, ce qui améliore le rendement propulsif et réduit le bruit de jet.

En régime de croisière ou de plein gaz, les moyens d'inversion de poussée sont inopérants. Tout le débit d'air circulant dans la veine secondaire est éjecté par la tuyère commune en même temps que les gaz chauds du flux primaire et la paroi interne de la tuyère est léchée par de l'air froid. Ce mode de fonctionnement est appelé mode « jet direct ».

En revanche en mode « jet inversé », les moyens d'inversion de poussée obturent la veine secondaire, et le flux secondaire est dévié vers l'extérieur et vers l'avant de la nacelle, et seuls les gaz chauds de la veine primaire passent par la tuyère d'éjection. La tuyère est alors soumise à de fortes températures. Le mode « jet inversé » est utilisé uniquement pour assurer le freinage de l'aéronef après son atterrissage, et, pour freiner efficacement l'aéronef, il faut demander de la puissance au turboréacteur, ce qui augmente l'intensité et la température du flux chaud éjecté par la tuyère. C'est pourquoi, la tuyère commune doit être réalisée en un matériau résistant à la chaleur du seul flux chaud, tel que le titane, ce qui augmente à la fois sa masse et son coût.

US 3 826 088 concerne un turboréacteur à usage militaire, non équipé de moyens d'inversion de poussée. La tuyère de ce turboréacteur entoure une chemise de protection thermique d'une chambre de post-combustion, et délimite avec cette dernière un canal annulaire continuellement alimenté par une partie du flux froid. La chemise comporte des fentes délivrant en permanence un film d'air sur sa face interne. Cette chemise n'est évidemment pas un élément structural de la tuyère, car elle doit pouvoir se dilater librement en fonction des variations des températures régnant dans la chambre de post-combustion.

FR 2 593 237 divulgue un dispositif de prélèvement d'air dans le flux froid d'un moteur à doubler flux avec inverseur de poussée, ce prélèvement d'air étant destiné au refroidissement, à la pressuration ou à la ventilation de l'avion. Mais ce document ne mentionne pas et ne suggère pas le refroidissement de la tuyère en mode de fonctionnement « jet inversé », dans un turboréacteur à double flux.

Le but de l'invention est de proposer un turboréacteur tel que mentionné en introduction dans lequel la tuyère d'éjection peut être réalisée dans un matériau moins dense.

Le but est atteint selon l'invention par le fait que le turboréacteur proposé comporte en outre des moyens pour refroidir la tuyère lorsque les moyens d'inversion de poussée sont dans la position active, lesdits moyens comportant des moyens de prélèvement d'un débit d'air de refroidissement, dans le flux secondaire en amont des moyens d'inversion de poussée, des moyens pour amener le débit d'air prélevé dans l'enceinte de ladite tuyère et des moyens pour former un film d'air de refroidissement sur la face interne de ladite tuyère.

L'invention exploite ainsi l'écart de pression entre l'amont et l'aval des volets en mode « jet inversé » pour faire circuler l'air prélevé dans le dispositif de refroidissement. La surpression dans le flux secondaire en amont des moyens d'inversion de poussée provient de la rotation du fan et de l'air qui s'engouffre dans l'entrée d'air du turboréacteur sous l'effet de la vitesse de l'avion. La dépression en aval des moyens d'inversion de poussée provient de l'effet aspiration dans la tuyère commune sous l'effet également de la vitesse de l'avion.

Le fait que, grâce à l'invention, la tuyère soit refroidie en mode « jet inversé », elle peut être réalisée dans un matériau moins dense et moins coûteux.

Avantageusement, les moyens pour former un film d'air sur la face interne de la tuyère comportent une multiperforation ménagée dans la paroi interne de ladite tuyère.

Selon un premier mode de réalisation de l'invention, le débit d'air de refroidissement est prélevé dans le flux secondaire au moyen d'au moins une écope.

Lorsque les moyens d'inversion de poussée comportent au moins une porte montée basculante sur des poutres longitudinales de la nacelle au moyen de pivots de support, et selon une première forme de réalisation de l'invention, l'écope est prévue sur la face interne de la porte, et les moyens pour amener le débit d'air prélevé dans l'enceinte de la tuyère comportent un conduit reliant l'écope à ladite enceinte via un alésage ménagé axialement dans un pivot de support de ladite porte.

Selon une deuxième forme de réalisation de l'invention, l'écope est prévue sur la face interne d'une poutre longitudinale en amont des pivots de support et les moyens pour amener le débit prélevé dans l'enceinte de la tuyère comportent un conduit reliant l'écope à ladite enceinte.

Lorsque les moyens d'inversion de poussée comportent des grilles fixes susceptibles d'être masquées par des obturateurs mobiles axialement, et des volets basculants susceptibles de dévier le flux secondaire vers les grilles en position déployée, l'écope est prévue sur le carter du moteur en amont des volets en position déployée, et les moyens pour amener dans l'enceinte de la tuyère le débit d'air prélevé comportent un conduit reliant l'écope à ladite enceinte via un bras radial reliant la tuyère au carter du moteur.

Dans tous les cas, la géométrie et la position de l'écope sont calculées de telle manière que l'écope ne perturbe pas outre mesure l'écoulement du flux secondaire en mode "jet direct", et de telle manière que, en mode "jet inversé", la pression de l'air dans l'écope soit suffisante pour assurer le prélèvement d'un débit d'air suffisant pour le refroidissement de la tuyère.

Selon un deuxième mode de réalisation de l'invention, le débit d'air de refroidissement est prélevé sur le moteur au niveau du dispositif de contrôle du jeu des turbines et les moyens pour amener dans l'enceinte de la tuyère le débit d'air prélevé comportent un conduit reliant une vanne de régulation dudit dispositif de contrôle de jeu à ladite enceinte via un bras radial reliant la tuyère au carter du moteur.

D'autres caractéristiques et avantages de l'invention ressortiront à la lecture de la description suivante faite à titre d'exemple et en référence aux dessins annexés dans lesquels :
la figure 1 est une coupe longitudinale d'un turboréacteur à double flux disposé sous une aile d'un aéronef dont la nacelle comporte un inverseur de poussée et une tuyère commune d'éjection des gaz du flux primaire et du flux secondaire ;
la figure 2 est une vue latérale d'un turboréacteur équipé d'un inverseur à portes ;
la figure 3 est une demi-coupe longitudinale du turboréacteur de la figure 2 selon un plan de symétrie d'une porte ;
la figure 4 est une coupe transversale selon la ligne IV-IV de la figure 3 qui montre une première forme de réalisation de l'invention ;
la figure 5 est une demi-coupe du turboréacteur de la figure 2 selon un plan de symétrie d'une poutre supportant une porte ;
la figure 6 montre à plus grande échelle le conduit d'amenée d'air installé dans la poutre ;
la figure 7 montre la partie amont de la tuyère ;
la figure 8 est une demi-coupe longitudinale du turboréacteur de la figure 2 selon un plan de symétrie d'une poutre et qui montre une deuxième forme de réalisation de l'invention ;
la figure 9 est une demi-coupe d'un turboréacteur dont la nacelle comporte un inverseur à grilles, cette demi-coupe étant prise selon un plan de symétrie d'un élément de cet inverseur, et les volets étant déployés ;
la figure 10 montre à plus grande échelle la région de l'écope sur le carter du moteur du turboréacteur de la figure 9 ;
la figure 11 montre à plus grande échelle le circuit de l'air prélevé à travers les bras de maintien de la tuyère du turboréacteur de la figure 9 ;
la figure 12 est une demi-coupe d'un turboréacteur dont la nacelle comporte un inverseur à grilles et dans lequel le prélèvement de l'air de refroidissement de la tuyère est réalisé dans le dispositif de contrôle du jeu des turbines.

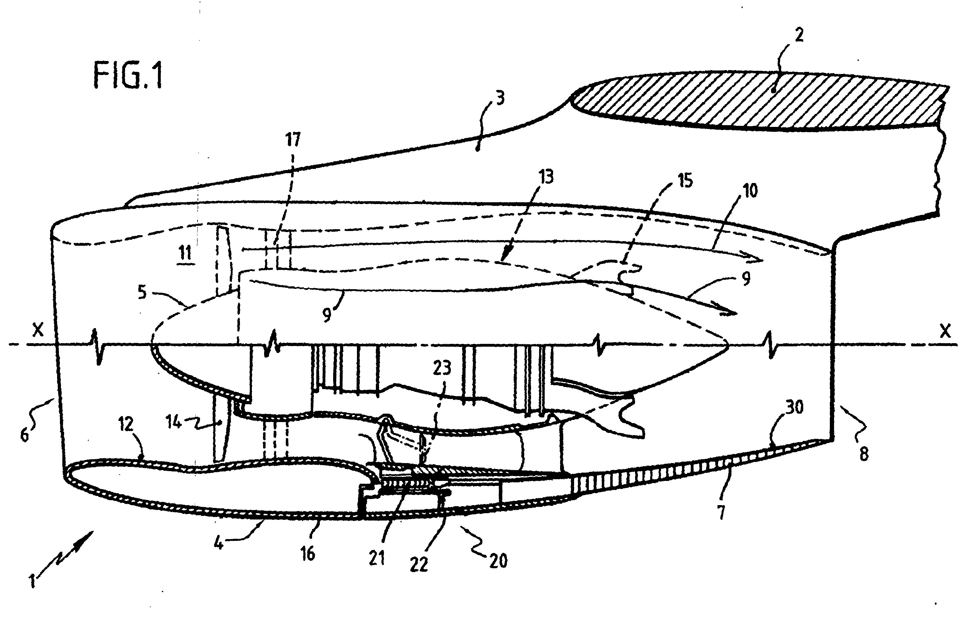

La figure 1 montre un groupe turbopropulseur 1 suspendu sous l'aile 2 d'un avion par l'intermédiaire d'une structure 3 appelée "mât". Le groupe 1 comporte une nacelle 4 entourant complètement un turboréacteur 5 à double flux d'axe X. La nacelle 4 comporte à l'avant une entrée d'air 6 située en amont du moteur, et à l'arrière une tuyère d'éjection 7 dont la sortie 8 est située en aval du moteur. La tuyère 7 permet l'éjection commune du flux primaire chaud 9 traversant le moteur et du flux secondaire froid 10 qui circule dans le canal annulaire 11 délimité par la paroi interne 12 de la nacelle 4 et le carter 13 du moteur.

Le flux primaire 9 suit dans le turboréacteur 5 le cycle habituel. Il est d'abord comprimé par des compresseurs, puis il sert à la combustion d'un carburant dans une chambre de combustion. Les gaz chauds issus de la chambre de combustion sont détendus dans une turbine à haute pression servant à entraîner les compresseurs, et dans une turbine à basse pression qui entraîne une soufflante 14 disposée à l'avant dans le canal annulaire 11, et sont éjectés à l'arrière du moteur où ils se mélangent avec le flux secondaire froid 10, grâce à un dispositif mélangeur 15 entouré par la tuyère 7.

La nacelle 4 est constituée d'amont en aval de quatre tronçons à savoir, à l'avant l'entrée d'air, suivie d'un corps 16 entourant la soufflante 14 et les aubes fixes 17 qui redressent le flux secondaire froid 10 délivré par la soufflante 14, puis un inverseur de poussée 20 disposé dans la section médiane de la nacelle 4, et enfin la tuyère d'éjection 7 du flux primaire chaud 9 et du flux secondaire froid 10.

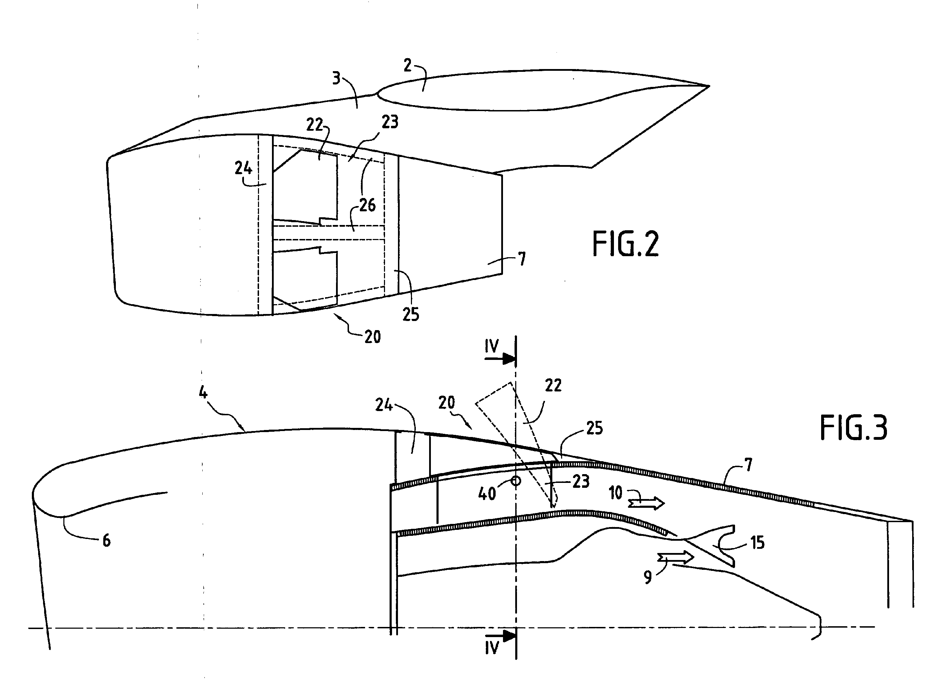

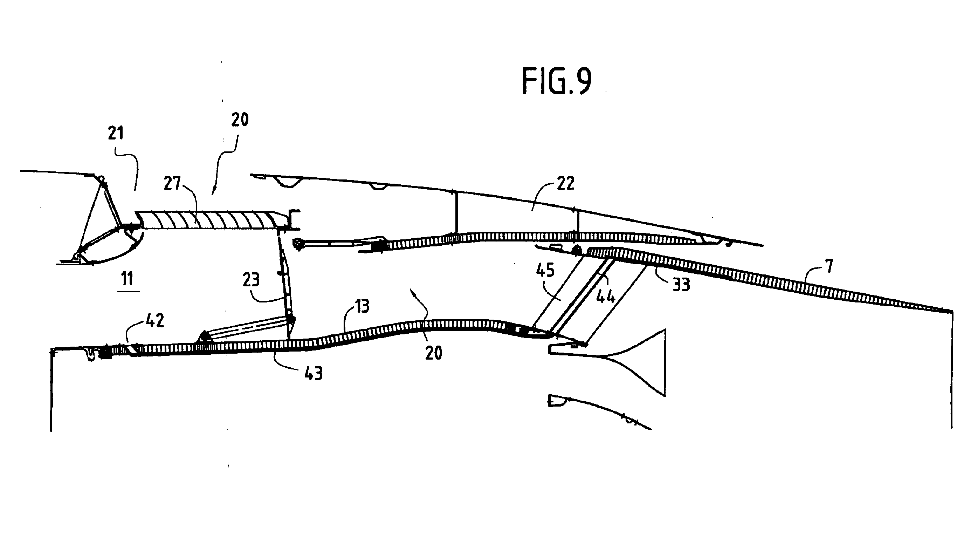

L'inverseur de poussée 20, montrée sur les figures 1 et 9 est du type à grilles, tandis que celui montré sur la figure 2 est du type à portes. Ces deux types d'inverseur comportent en commun des ouvertures radiales 21 ménagées dans la paroi de la nacelle 4 et susceptibles d'être occultées par des obturateurs mobiles 22, et des moyens 23 pour fermer le canal annulaire 11 à l'arrière des ouvertures radiales 21.

Les ouvertures radiales 21 sont ménagées entre un cadre avant annulaire 24, et un cadre arrière annulaire 25 reliés par des poutres longitudinales 26, l'ensemble formant une cage d'écureuil. Lorsque l'inverseur est du type à grilles, les ouvertures radiales 21 comportent des grilles 27 destinées à dévier le flux secondaire 10 vers l'extérieur de la nacelle 4 et vers l'avant en mode "jet inversé". Les deux cadres 24 et 25 et les poutres 26 sont des structures creuses pour être rigides et légères.

Lorsque l'inverseur de poussée 20 est en mode "jet direct", le canal annulaire 11 est ouvert, les ouvertures radiales 21 sont obturées par les obturateurs mobiles 22, de sorte que le flux secondaire froid 10 circule dans le canal annulaire 11 de l'avant vers l'arrière et assure avec le flux primaire chaud 9 la poussée du turboréacteur 5. La tuyère 7 est dans ce cas refroidie par le flux froid 10.

Lorsque l'inverseur de poussée 20 est en mode "jet inversé", les ouvertures radiales 21 sont ouvertes et le canal annulaire 11 est fermé, de sorte que le flux secondaire froid 10 est dirigé vers l'extérieur et vers l'avant de la nacelle 4 par les ouvertures latérales 21, ce qui produit l'inversion de poussée destinée à freiner l'avion roulant sur le sol. Dans le mode "jet inversé", seul le flux primaire chaud 9 passe par la tuyère 7, ce qui réchauffe cette dernière. Or pour freiner efficacement l'avion, il faut demander de la puissance au turboréacteur 5, ce qui augmente l'intensité et la température du flux primaire chaud 9.

Selon l'invention, le groupe turbopropulseur 1 comporte des moyens pour former contre la paroi interne 30 de la tuyère 7 un film d'air froid 31 qui la refroidit et l'isole du flux primaire chaud 9 notamment en mode "jet inversé".

A cet effet, la région avant de la tuyère 7 comporte entre la paroi interne 30 et le capotage externe 32 une enceinte annulaire 33 susceptible de recevoir de l'air froid qui communique avec l'intérieur de la tuyère 7 en aval du mélangeur 15 par une pluralité de perforations 34 ménagées dans la paroi interne 30.

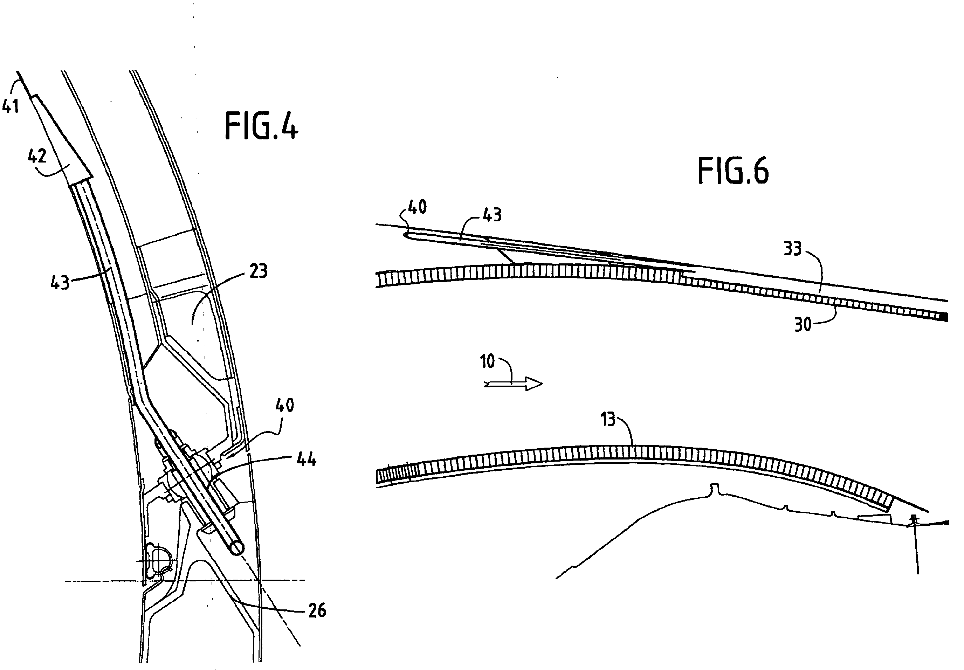

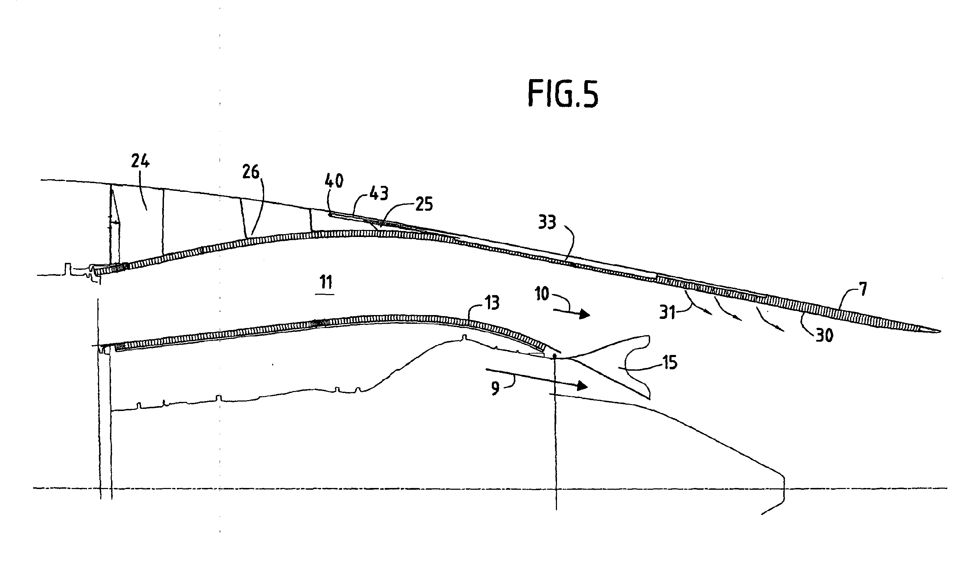

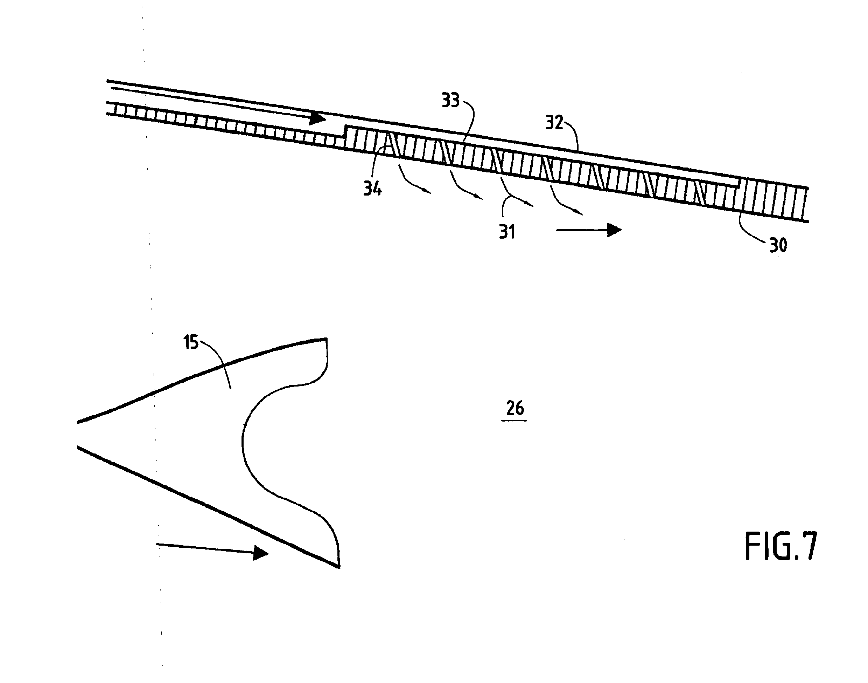

Les--figures 2 à 7 montrent en détail une première forme de réalisation de l'invention appliquée à un inverseur de poussée à portes. Dans ce mode de réalisation, les obturateurs mobiles 22 sont constitués par des portes montées pivotantes sur deux poutres adjacentes 26 au moyen de pivots 40, de telle manière que dans la position "jet inversé" les portions aval 23 des portes 22 viennent fermer le canal annulaire 11, et dévient le flux secondaire 10 vers les ouvertures latérales 21 et vers l'avant de la nacelle 4, ainsi que cela est montré en pointillé sur la figure 3.

La face interne 41 de la porte 22 est équipée d'une écope 42, dont la configuration est telle qu'en position "jet inversé" elle permet de prélever un débit d'air froid suffisant pour refroidir la tuyère 7. Ce débit d'air est conduit vers l'enceinte annulaire 33 de la tuyère 7 par un conduit flexible 43, qui débouche à une extrémité dans la cavité interne de l'écope 42, passe par un alésage 44 ménagé dans un pivot 40, loge en partie dans la cavité interne de la poutre longitudinale correspondante 26 et débouche par l'autre extrémité dans l'enceinte annulaire 33 de la tuyère 7.

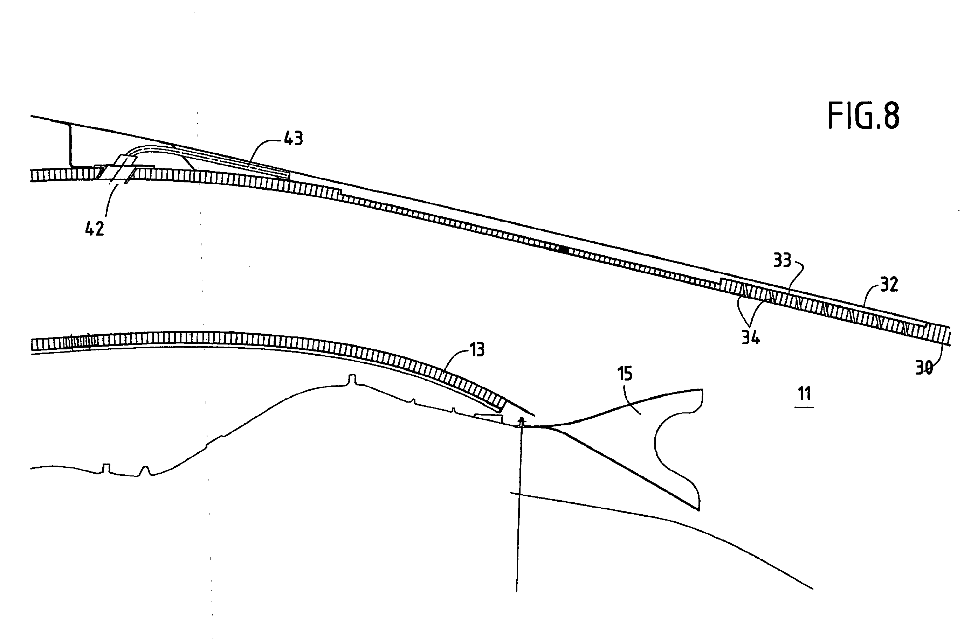

La figure 8 montre une deuxième forme de réalisation de l'invention appliquée à un inverseur de poussée 20 à portes. L'écope 42 est ici prévue sur la face interne d'une poutre 26 en amont des portions arrière 23 des portes en position "jet inversé". L'air prélevé par l'écope 42 est transmis vers l'enceinte 33 de la tuyère 7 par un conduit 43 qui, dans le cas présent, n'est pas nécessairement flexible.

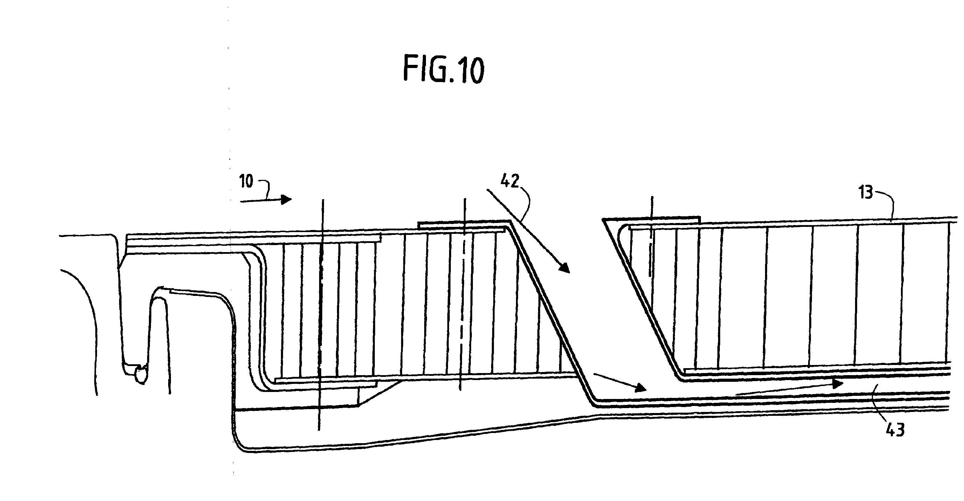

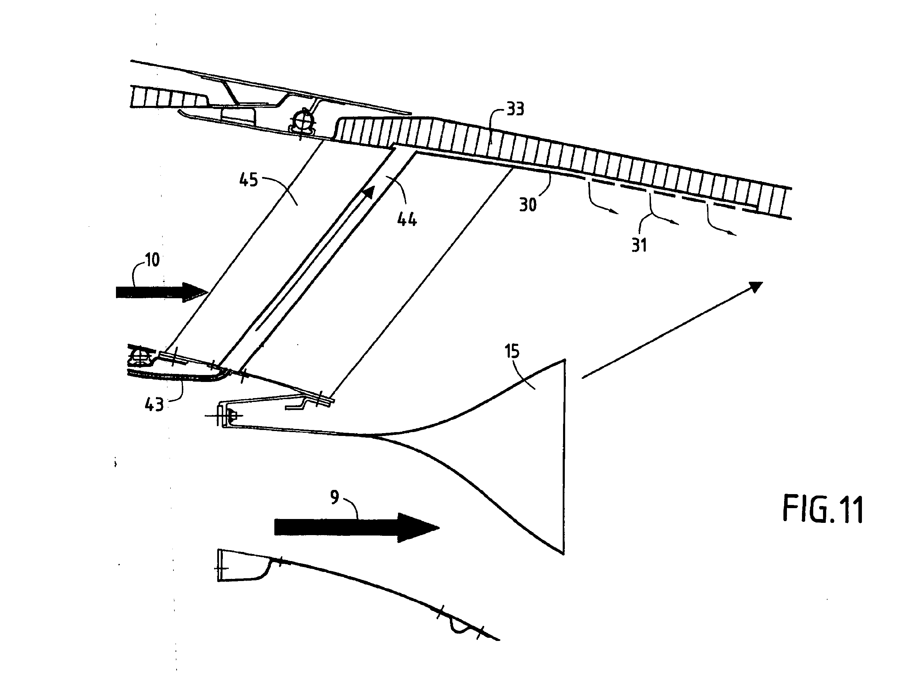

Les figures 9 à 11 montrent en détail une forme de réalisation de l'invention appliquée à un inverseur de poussée 20 de type à grilles. Le débit d'air de refroidissement de la tuyère 7 est prélevé dans le flux secondaire 10 au moyen d'une écope 42 prévue dans le carter 13 du turboréacteur 5 en amont des volets 23 qui dévient le flux secondaire 10 en position déployée, et est amené vers l'enceinte 33 de la tuyère 7 par un conduit 43 disposé dans le carter 13 et par un conduit 44 ménagé dans un bras radial 45 reliant la tuyère 7 au carter 13 du moteur.

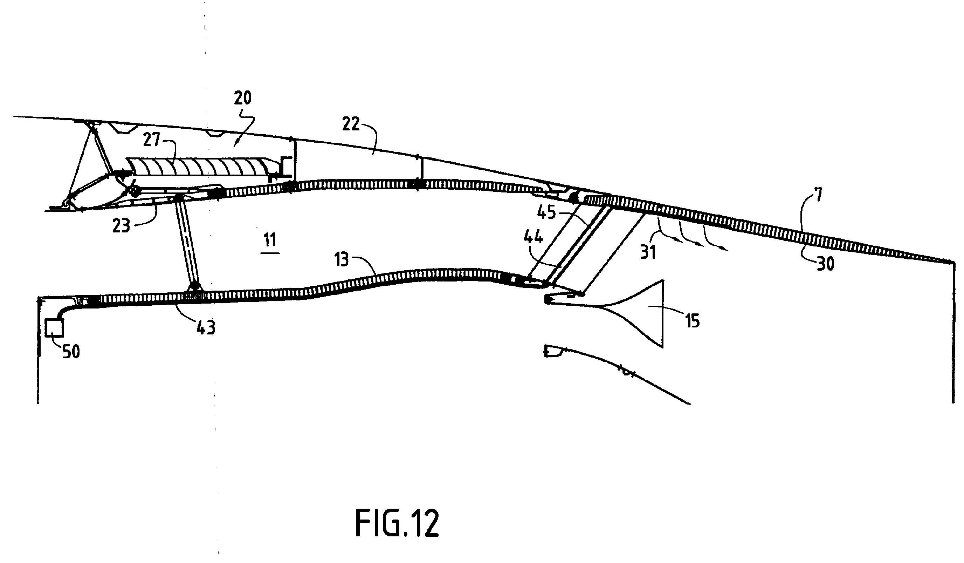

La figure 12 montre une autre forme de réalisation de l'invention appliquée à un inverseur de poussée 20 à grilles. Le débit d'air froid de la tuyère 7 est ici prélevé sur le moteur au niveau d'une vanne 50 de régulation du dispositif de contrôle du jeu des turbines et les moyens pour amener le débit d'air prélevé vers l'enceinte 33 de la tuyère comportent, comme dans l'exemple précédent, un conduit 43 disposé dans le carter et un conduit 44 ménagé dans un bras radial 45 reliant la tuyère 7 au carter 13 du moteur. L'air alimentant le dispositif de contrôle du jeu est prélevé dans le flux froid en amont des moyens d'inversion de poussée, ce qui assure une bonne circulation de l'air de refroidissement de la tuyère en mode « jet inversé », du fait de l'écart de pression entre l'amont et l'aval des moyens d'inversion de poussée dans ce mode de fonctionnement.

## Revendications

1. Turboréacteur à double flux comportant un moteur (5) d'axe X logeant complètement dans une nacelle (4) tubulaire dont la paroi interne (12) définit avec le carter (13) dudit moteur un passage annulaire (11) dans lequel s'écoule un flux secondaire (10) délivré par une soufflante (14), ladite nacelle (4) présentant une entrée d'air (6) en amont du moteur, des moyens d'inversion de poussée (20) dans sa section médiane, et une tuyère commune (7) d'éjection du flux primaire (9) et du flux secondaire (10) située en aval du carter (13) du moteur, lesdits moyens d'inversion de poussée étant susceptibles de prendre une position active dans laquelle le flux secondaire (10) est dévié vers l'extérieur et vers l'avant de ladite nacelle, ladite tuyère (7) comportant une enceinte (33) délimitée par les parois interne (30) et externe (32) de ladite tuyère, **caractérisé par le fait qu'**il comporte en outre des moyens pour refroidir la tuyère (7) lorsque les moyens d'inversion de poussée (20) sont dans la position active, lesdits moyens comportant des moyens de prélèvement (42) d'un débit d'air de refroidissement, dans le flux secondaire (10) en amont des moyens d'inversion de poussée (20), des moyens (43) pour amener le débit d'air prélevé dans l'enceinte (33) de ladite tuyère (7) et des moyens (34) pour former un film d'air (31) de refroidissement sur la face interne de ladite tuyère (7).

2. Turboréacteur selon la revendication 1, **caractérisé par le fait que** les moyens pour former un film d'air (31) sur la face interne de ladite tuyère (7) comportent une multiperforation (34) ménagée dans la paroi interne (30) de ladite tuyère (7).

3. Turboréacteur selon l'une quelconque des revendications 1 ou 2, **caractérisé par le fait que** le débit d'air de refroidissement est prélevé dans le flux secondaire (10) au moyen d'au moins une écope (42).

4. Turboréacteur selon la revendication 3, **caractérisé par le fait que** les moyens d'inversion (20) de poussée comportent au moins une porte (23) montée basculante sur des poutres longitudinales (26) de la nacelle (4) au moyen de pivots de support (40).

5. Turboréacteur selon la revendication 4, **caractérisé par le fait que** l'écope (42) est prévue sur la face interne (41) de la porte (23), et les moyens pour amener le débit d'air prélevé dans l'enceinte (33) de la tuyère (7) comportent un conduit (43) reliant l'écope (42) à ladite enceinte (33) via un alésage (44) ménagé axialement dans un pivot de support (40) de ladite porte (23).

6. Turboréacteur selon la revendication 4, **caractérisé par le fait que** l'écope (42) est prévue sur la face interne d'une poutre longitudinale (26) en amont des pivots de support (40) et les moyens pour amener le débit d'air prélevé dans l'enceinte (33) de la tuyère (7) comportent un conduit (43) reliant l'écope (42) à ladite enceinte (33).

7. Turboréacteur selon la revendication 3, **caractérisé par le fait que** les moyens d'inversion (20) de poussée comportent des grilles fixes (27) susceptibles d'être masquées par des obturateurs (22) mobiles axialement, et des volets (23) basculants susceptibles de dévier le flux secondaire vers les grilles (27) en position déployée, l'écope (42) est prévue sur le carter (13) du moteur en amont des volets (23) en position déployée et les moyens pour amener le débit d'air prélevé dans l'enceinte (33) de la tuyère (7) comportent un conduit (43, 44) reliant l'écope à ladite enceinte via un bras radial (45) reliant la tuyère (7) au carter (13) du moteur.

8. Turboréacteur selon la revendication 2, **caractérisé par le fait que** le débit d'air de refroidissement est prélevé sur le moteur au niveau d'une vanne (50) de régulation du dispositif de contrôle du jeu des turbines et les moyens pour amener le débit d'air prélevé dans l'enceinte de la tuyère comportent un conduit (43, 44) reliant ladite vanne à ladite enceinte (33) via un bras radial (45) reliant la tuyère (7) au carter (13) du moteur.

## Claims

1. By-pass turbojet engine, comprising a motor (5) having an axis X and housed completely in a tubular nacelle (4), the internal wall (12) of which defines with the casing (13) of said motor an annular passage (11) in which a secondary flow (10) delivered by a fan (14) flows, said nacelle (4) having an air intake (6) upstream of the motor, thrust-reversing means (20) in its median section, and a common duct (7) for exhausting the primary flow (9) and the secondary flow (10) located downstream of the motor casing (13), said thrust-reversing means being able to adopt an active position in which the secondary flow (10) is deflected towards the outside and towards the front of said nacelle, and said duct (7) including a chamber (33) delimited by the internal (30) and external (32) walls of said duct, **characterised in that** it includes in addition means for cooling the duct (7) when the thrust-reversing means (20) are in the active position, said cooling means including means (42) for drawing off a cooling air delivery from the secondary flow (10) upstream of the thrust-reversing means (20), means (43) for conducting the drawn-off air delivery into the chamber (33) of said duct (7) and means (34) for forming a cooling air film (31) on the internal face of said duct (7).

2. Turbojet engine according to claim 1, **characterised in that** the means for forming an air film (31) on the internal face of said duct (7) include multiple perforations (34) formed in the internal wall (30) of said duct (7).

3. Turbojet engine according to either of claims 1 and 2, **characterised in that** the cooling air delivery is drawn from the secondary flow (10) by means of at least one scoop (42).

4. Turbojet engine according to claim 3, **characterised in that** the thrust-reversing means (20) include at least one gate (23) mounted tiltably on longitudinal beams (26) of the nacelle (4) by means of support pivots (40).

5. Turbojet engine according to claim 4, **characterised in that** the scoop (42) is provided on the internal face (41) of the gate (23), and the means for conducting the drawn-off air delivery into the chamber (33) of the duct (7) include a conduit (43) connecting the scoop (42) to said chamber (33) via a bore (44) formed axially in a support pivot (40) of said gate (23).

6. Turbojet engine according to claim 4, **characterised in that** the scoop (42) is provided on the internal face of a longitudinal beam (26) upstream of the support pivots (40), and the means for conducting the drawn-off air delivery into the chamber (33) of the duct (7) include a conduit (43) connecting the scoop (42) to said chamber (33).

7. Turbojet engine according to claim 3, **characterised in that** the thrust-reversing means (20) include fixed gratings (27) able to be masked by axially movable shutters (22), and tiltable flaps (23) able to deflect the secondary flow towards the gratings (27) in the deployed position, the scoop (42) is provided on the motor casing (13) upstream of the flaps (23) in the deployed position and the means for conducting the drawn-off air delivery into the chamber (33) of the duct (7) include a conduit (43, 44) connecting the scoop to said chamber via a radial arm (45) connecting the duct (7) to the motor casing (13).

8. Turbojet engine according to claim 2, **characterised in that** the cooling air delivery is drawn from the motor in the region of a control valve (50) of the device for controlling the clearance of the turbines, and the means for conducting the drawn-off air delivery into the chamber of the duct include a conduit (43, 44) connecting said valve to said chamber (33) via a radial arm (45) connecting the duct (7) to the motor casing (13).

## Patentansprüche

1. Zweikreis-Turboluftstrahltriebwerk mit einem Motor (5) mit der Achse X, das komplett in einer röhrenförmigen Gondel (4) untergebracht ist, deren Innenwand (12) mit dem Gehäuse (13) des Motors einen ringförmigen Kanal (11) definiert, in dem ein Sekundärstrahlstrom (10) strömt, der von einem Gebläse (14) abgegeben wird, wobei die Gondel (4) einen Lufteintritt (6) stromaufwärts des Motors, Schubumkehrmittel (20) in ihrem mittleren Abschnitt und ein gemeinsames Strahlrohr (7) zum Auswerfen des Primärstrahlstroms (9) und des Sekundärstrahlstroms (10) umfasst, das sich stromabwärts des Gehäuses (13) des Motors befindet, wobei die Schubumkehrmittel (20) eine aktive Position einnehmen können, in der der Sekundärstrahlstrom (10) nach außerhalb und zur Vorderseite der Gondel umgeleitet wird, wobei das Strahlrohr (7) einen Einschluss (33) aufweist, der von der Innenwand (30) und der Außenwand (32) des Strahlrohrs abgegrenzt wird, **dadurch gekennzeichnet, dass** er ferner Mittel zum Kühlen des Strahlrohrs (7) aufweist, wenn sich die Schubumkehrmittel (20) in der aktiven Position befinden, wobei die Mittel Mittel (42) zur Entnahme eines Kühlluftdurchflusses aus dem Sekundärstrahlstrom (10) stromaufwärts der Schubumkehrmittel (20) umfassen, Mittel (43), um den entnommenen Luftdurchfluss in den Einschluss (33) des Strahlrohrs (7) zu führen, und Mittel (34), um eine Luftschicht (31) zum Kühlen auf der Innenseite des Strahlrohrs (7) zu bilden.

2. Turboluftstrahltriebwerk nach Anspruch 1, **dadurch gekennzeichnet, dass** die Mittel zum Bilden einer Luftschicht (31) auf der Innenseite des Strahlrohrs (7) eine Multilochung (34) aufweisen, die in der Innenwand (30) des Strahlrohrs (7) eingerichtet ist.

3. Turboluftstrahltriebwerk nach einem der Ansprüche 1 oder 2, **dadurch gekennzeichnet, dass** der Kühlluftdurchfluss aus dem Sekundärstrahlstrom (10) mittels mindestens eines Schöpfers (42) entnommen wird.

4. Turboluftstrahltriebwerk nach Anspruch 3, **dadurch gekennzeichnet, dass** die Schubumkehrmittel (20) mindestens eine Tür (23) aufweisen, die auf Längsbalken (26) der Gondel (4) mittels Stützzapfen (40) schwenkend montiert ist.

5. Turboluftstrahltriebwerk nach Anspruch 4, **dadurch gekennzeichnet, dass** der Schöpfer (42) auf der Innenseite (41) der Tür (23) vorgesehen ist, und dass die Mittel zum Zuführen des entnommenen Luftdurchflusses in den Einschluss (33) des Strahlrohrs (7) eine Leitung (43) umfassen, die den Schöpfer (42) mit dem Einschluss (33) über eine Bohrung (44) verbinden, die axial in einem Stützzapfen (40) der Tür (23) eingerichtet ist.

6. Turboluftstrahltriebwerk nach Anspruch 4, **dadurch gekennzeichnet, dass** der Schöpfer (42) auf der Innenseite eines Längsbalkens (26) stromaufwärts der Stützzapfen (40) vorgesehen ist, und die Mittel zum Zuführen des entnommenen Luftdurchflusses in den Einschluss (33) des Strahlrohrs (7) eine Leitung (43) aufweisen, die den Schöpfer (42) mit dem Einschluss (33) verbindet.

7. Turboluftstrahltriebwerk nach Anspruch 3, **dadurch gekennzeichnet, dass** die Schubumkehrmittel (20) stationäre Gitter (27) aufweisen, die von axial beweglichen Verschlusselementen (22) abgedeckt werden können, und Schwenkklappen (23), die den Sekundärstrahlstrom zu den Gittern (27) in ausgebreiteter Stellung umleiten können, wobei der Schöpfer (42) auf dem Gehäuse (13) des Motors stromaufwärts der Klappen (23) in ausgebreiteter Stellung vorgesehen ist, und die Mittel zum Zuführen des entnommenen Luftdurchflusses in den Einschluss (33) des Strahlrohrs (7) eine Leitung (43, 44) umfassen, die den Schöpfer mit dem Einschluss über einen radialen Arm (45) verbindet, der das Strahlrohr (7) mit dem Gehäuse (13) des Motors verbindet.

8. Turboluftstrahltriebwerk nach Anspruch 2, **dadurch gekennzeichnet, dass** der Kühlluftdurchfluss auf dem Motor auf der Ebene eines Schiebers (50) zum Regulieren der Steuervorrichtung des Spiels der Turbinen entnommen wird, und die Mittel zum Zuführen des entnommenen Luftdurchflusses in den Einschluss des Strahlrohrs eine Leitung (43, 44) umfassen, die den Schieber mit dem Einschluss (33) über einen radialen Arm (45) verbinden, der das Strahlrohr (7) mit dem Gehäuse (13) des Motors verbindet.
